# EUROPEAN PATENT SPECIFICATION

(11) **EP 1 550 589 B1**
(45) Date of publication and mention of the grant of the patent: **11.04.2007**
(21) Application number: 03258230.6
(22) Date of filing: 30.12.2003
(51) Int. Cl.: B60R 22/34

(54) **Belt retractor**
Gurtaufroller
Enrouleur de ceinture

(43) Date of publication of application: 06.07.2005
(73) Proprietor: KEY SAFETY SYSTEMS, INC., Sterling Heights, MI 48314 (US)
(72) Inventor: Bell, John, Carlisle, Cumbria (GB); Jack, Brian, Eastriggs, Carlisle (GB); Palliser, Martyn, Dalston, Carlisle CA5 7NF (GB)
(74) Representative: Freeman, Jacqueline Carol

(56) References cited:
- US-A- 5 967 442
- US-A1- 2001 050 474
- US-A1- 2003 141 398
- US-A1- 2003 192 976

## Description

The present invention relates to a retractor for a vehicle safety restraint.

A retractor generally comprises a cylindrical spool. Seat belt webbing is attached to and wound around the spool and the spool is mounted on a spool shaft in the retractor to be rotatable. Webbing is wound onto the spool under action of a retractor spring and is paid out under the influence of relatively gentle forwardly directed movement of a vehicle occupant, for example to allow for normal movement associated with vehicle occupancy such as reaching forwards to activate in-car controls (for a radio or a window) or to reach a glove compartment or door pocket. In the event of a crash situation, the more extreme momentum of the occupant activates a crash sensor which locks the spool against rotation and thus prevents forward motion of the occupant and injury due to occupant collision with the interior fixtures of the vehicle such as the steering wheel, dashboard or windscreen.

However, this sudden locking of the seat belt spool under crash conditions can itself sometimes cause injury to the occupant due to sudden impact of the torso with the belt webbing. This is particularly true in high velocity crashes.

In recent years this problem has been recognised and some solutions proposed.

One known approach is to interpose a deformable member such as steel torsion bar in the force path between the locking mechanism and the spool. Under application of a high torque a torsion bar can rotate up to 7 or 8 times whilst still remaining intact and thereby allow pay-out of webbing generally in proportion to the momentum of the vehicle occupant at the moment of a crash condition being sensed. It thus reduces the injurious effects of the seat belt in a crash. However the load limiting effect provided by such retractors is reliant upon the material properties of the deformable member and so only one predefined level of load limiting can be achieved for a given crash situation.

However the forces exerted on the occupant during a crash vary. There are higher forces during the initial moments of the crash and the force decreases with time. Thus two-stage load limiting retractors have been suggested. These typically include a combination of two deformable elements arranged such that one deformable element provides continuous load limiting and the second element is engaged at a predetermined point in time to temporarily provide a higher level of load limiting.

US 2001 0050474 A shows a seat belt retractor according to the preamble of claim 1.

These known retractors provide load limiting in accordance with a standard crash scenario and do not allow for adjustment to suit different vehicle occupants and crash criteria in situ. The weight and size of an occupant and the severity of the crash affects the performance of such load limiters and so it would be an advantage to provide an improved retractor which can offer load limiting to suit such variables more closely.

According to the present invention there is provided a seat belt retractor comprising: a spool mounted for rotation to allow retraction or pay-out of seat-belt webbing wound thereon depending upon the rotation direction of the spool; a locking ring connected to the spool for rotation therewith; a locking plate connected to the spool for rotation therewith; a lock bar activated by a crash sensor to engage the locking ring to prevent rotation when a crash condition is sensed; first and second force limiting means for controlling pay-out of the seat belt webbing after the locking ring has been locked against rotation; the first force limiting means comprising resilient means having one end connected to the locking ring and the other end connected to the spool in the force path between the spool and the lock bar; the second force limiting means comprising a wire having one end located in a recess in the spool and the other end connected to the locking plate; means for selectively engaging the locking plate with the locking ring; and means for selectively connecting the locking plate to the lockbar such that when the locking plate is secured against rotation the second force limiting means is activated.

Advantageously the resilient wire may be selectively released from the force path at a predetermined time during a crash situation, preferably under control of a control signal.

The control signal may be supplied in dependence upon a value of at least one of the weight, size and position of the occupant and/or the severity of the crash. The control signal may be supplied if the sensed value is below a predetermined value.

The invention makes possible adaptive load limiting by enabling the selection of two different restraining levels during a crash. Such an arrangement is particularly advantageous in that it can provide a suitable restraining level for at least three broad categories of seat occupant, for example small, medium or large occupants. A smaller occupant is likely to require only the first resilient means to provide appropriate load limiting throughout the duration of a crash, whereas a large occupant is likely to require a higher level of load limiting as provided by the combination of both the torsion bar and the wire of the present invention. In the earlier stages of a crash situation, where the forces exerted on the occupant tend to be highest, a medium sized occupant is likely to require the higher level of load limiting but sometime into the crash, the lower level may be more appropriate. Switching from a high to a low restraining level would be especially beneficial if timed to coincide with an occupant's engagement with an airbag and would allow the restraining force exerted on the occupant to be more appropriately shared between both the airbag and the seat belt webbing, reducing the impact on any one area of the body of the occupant.

Furthermore in combining the criteria of occupant size or weight with that of crash severity and occupant position, it will be appreciated that the retractor of the present invention can provide suitable load limiting for a broad range of crash scenarios. For example an occupant sitting relatively far from an airbag may be better protected if the retractor steps down to provide a lower restraining force in order to pay out enough webbing to enable correct engagement with an airbag, whilst the same occupant sitting close to an airbag during a crash may require the higher level of restraint.

According to one embodiment of the present invention the locking plate is engaged with a locking ring and may be selectively disengaged from the locking ring by means for translating the locking plate.

According to a further embodiment the locking means comprises at least one lockbar engaging each of the locking plate and locking ring such that the at least one lockbar in engagement with the locking plate may be disengaged, allowing the locking plate to rotate with the spool, thereby releasing the wire from the force path.

Advantageously the locking plate and the locking ring have teeth formations and the wire is stored in a recess in the spool. The wire may be deformed due to rotation of the spool relative to the locking means when connected in the force path between the spool and the locking means.

Beneficially the force limiting means is primed with the wire held in the force path between the spool and the locking means prior to a crash condition.

The means for translating the locking plate may comprise either a pyrotechnic device or a solenoid.

For a better understanding of the present invention and to show how the same may be carried into effect, reference will now be made, by way of example, to the following drawings, of which:
Figure 1 is a side view of a section taken along the axis of the spool of a first embodiment prior to a crash.
Figure 2 is a side view of a section taken along the axis of the spool of a first embodiment prior to a crash after disengagement of the wire.
Figure 3 is a side view of a section taken along the axis of the spool of a second embodiment prior to a crash.
Figure 4 is a side view of a section taken along the axis of the spool of a second embodiment prior to a crash after disengagement of the wire.
Figure 5 shows possible force curves provided for by the present invention.

The arrangement of the invention is used in a traditional retractor which is well known to a person skilled in the art. Such retractor typically comprises a cylindrical retractor spool mounted for rotation in a frame for winding in and paying-out seat belt webbing.

In a crash, a sensor activates a locking mechanism to move a lockbar to engage teeth on a locking ring which is fixed to one end of the spool. Subject to further movement due to load limiting arrangements the spool is then locked against further rotation. The other end of the spool is connected to a rewind spring mechanism which comprises a clock type coiled spring which biases the spool to a webbing rewound condition.

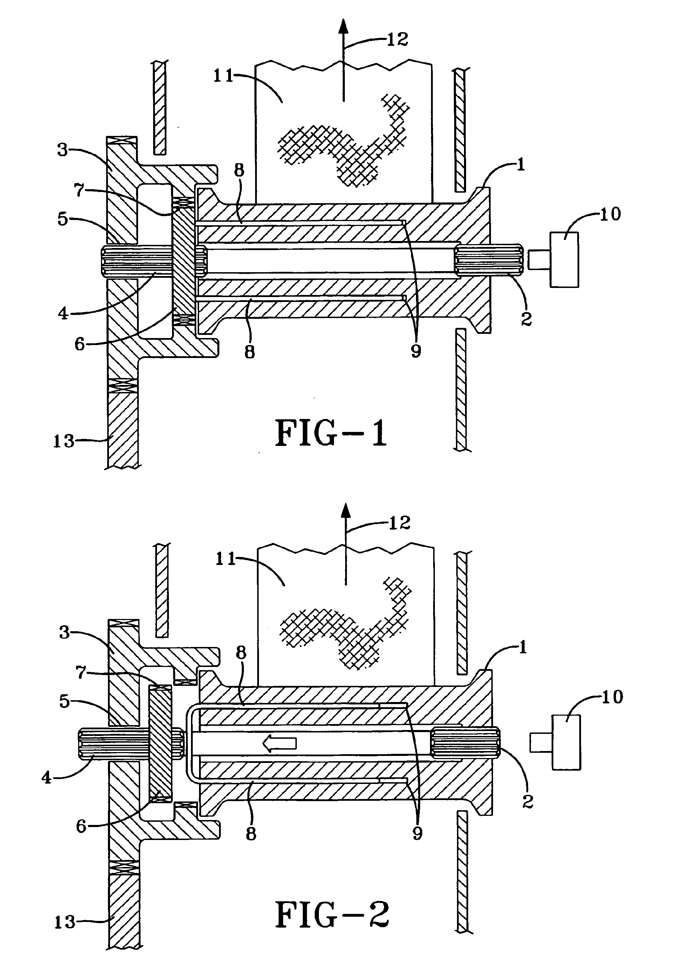

Figure 1 shows a spool 1 in cross section with a load limiting torsion bar 2 mounted along the axis of the spool and fixed at one end to a locking ring 3 by engagement of splines 4 in a correspondingly shaped hole 5 in the locking ring 3. A locking plate 6 is mounted at the same end of the torsion bar 2 and is disposed around the torsion bar 2. Teeth 7 are formed around an outer circumferential surface of the locking plate 6 so as to engage corresponding teeth formations on an inner surface of the locking ring 3. Wires 8 are housed in a recess 9 along the length of the spool and are releasably engaged at one end in holes in the locking plate 6.

Webbing 11 is wound on the spool and unwound in the direction of arrow 12.

A pyrotechnic device 10 is arranged for operation at the other end of the torsion bar 2, connected to the spool 1 at the side of the retractor at which the rewind spring is attached to the spool 1.

A crash sensor detects a crash by the sudden deceleration which occurs and causes a load bearing lockbar 13 to engage the locking ring 3 and thus to lock the spool against further rotation. However, if the crash force is above a predetermined value then the force on the torsion bar 2 will cause it to twist and the spool 1 will rotate relative to the locking ring 3 under conditions controlled by the torsion bar 2, paying out a small amount of webbing 11 until the crash forces have dissipated. The torsion bar 2 thus acts as a first load limiting mechanism.

The wire 8 forms a second load limiting mechanism when it is connected between the spool 1 and the locking plate 6. The locking plate 6 is initially engaged with the locking ring 3 and, as the torsion bar 2 twists relative to the locking ring 3, the wires 8 are gradually drawn out of the recesses 9 in the spool 1. The combination of the torsion bar 2 and the wires 8 raises the load limiting threshold giving a higher combined level of load limiting than the torsion bar 2 on its own.

A sensor (not shown) continually senses values of occupant weight, size, position and crash severity and these values are compared to predetermined values in order to wether the desired level of load limiting which is required for example whether the torsion bar 2 alone or a combination of the torsion bar 2 and the wires 8 is preferable. A control signal is issued if the combined level of load limiting is not required, for example in the event of a less severe crash, which causes the pyrotechnic device 10 to fire and move the locking plate 6 to the left in the figure to the position shown in figure 2, thereby disconnecting the locking plate 6 from the wire 8 and the locking ring 3. With the locking plate 6 disconnected the wires 8 are no longer held in the force path between the spool 1 and the locking ring 3 and a lower level of load limiting is provided by the torsion bar 2 alone.

The pyrotechnic device may act on the torsion bar 2, moving the locking plate 6 axially by the required amount or may alternatively push the locking plate 6 directly.

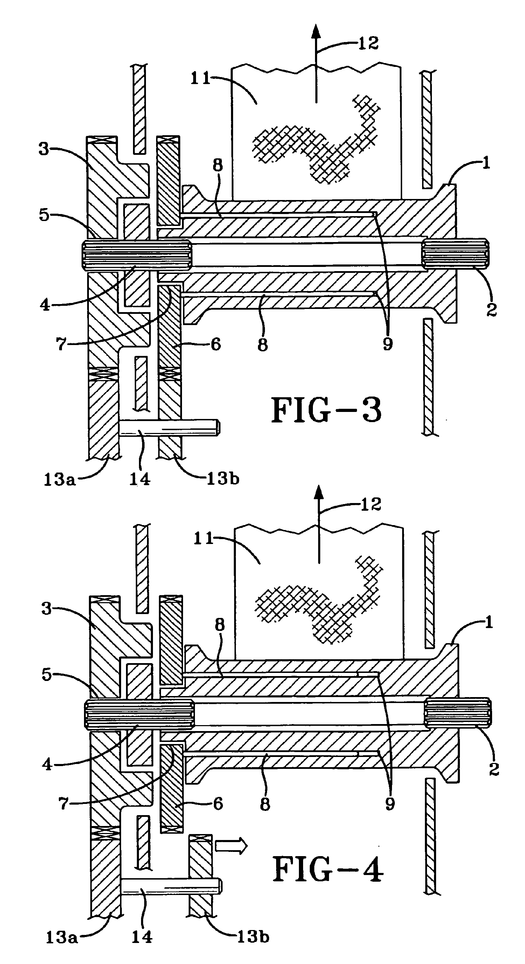

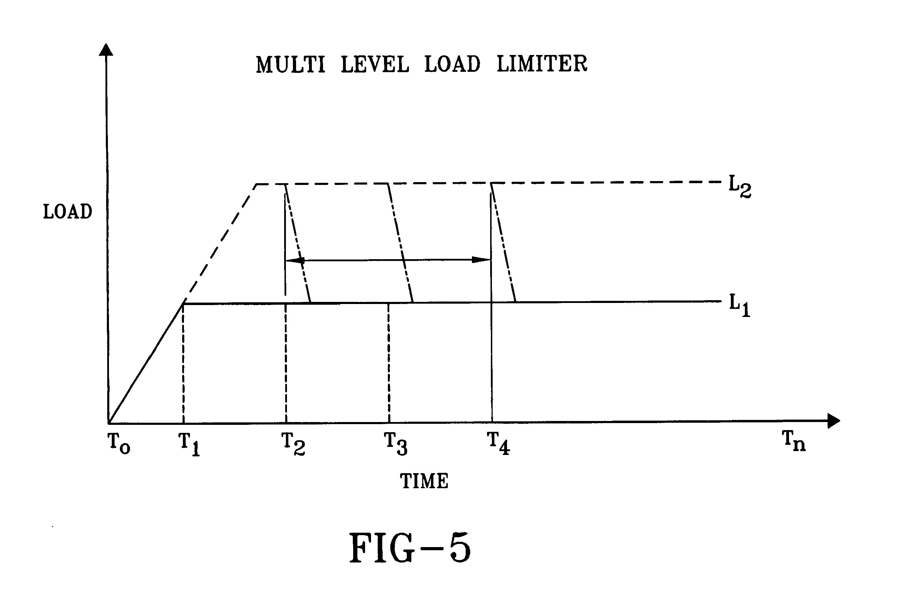

In a second embodiment shown in figures 3 and 4, the locking ring 3 and locking plate 6 are not directly coupled together and the locking plate 6 is mounted so as to be rotatable with the spool 1. Both the locking ring 3 and the locking plate 6 have tooth form actions on their external radial surfaces, which are engaged by lockbars 13a and 13b respectively during a crash situation to prevent rotation. In this embodiment the wires 8 are not detachable from the locking plate 6.

The lockbars 13a, 13b are coupled together by a connecting rod 14 such that both the locking plate 6 and the locking ring 3 may be locked simultaneously. In this condition the combined level of load limiting is provided by both the torsion bar 2 and the wires 8 due to rotation of the spool 1 relative to the locking plate 6 and locking ring 3. Under control of the control signal, a pyrotechnic device fires, forcing the lockbar 13b out of engagement with the locking plate 6 as shown in figure 3 and allowing the locking plate 6 to rotate freely with the spool 1. Since there is no longer any relative rotation between the spool 1 and the locking plate 6, the wires 8 are disconnected from the force path between the spool 1 and the locking ring 3 and load limiting is now provided by the torsion bar 2 only.

The disengagement of the locking plate 6 with the locking ring 3 provides a particularly reliable mode of operation and, whilst the above embodiments employ a pyrotechnic device for this purpose, the same may be achieved by other means such as, for example, a solenoid.

The graph of figure 5 shows the load limitation levels available during a crash starting at time To. The retractor is primed with both the torsion bar 2 and the wires 8 are engaged for load limitation prior to a crash situation. The locking ring 3 is locked at To by the lockbar 13a, and the load exerted on the occupant increases until T₁. If a control signal is provided prior to the time T₁, the torsion bar 2 alone provides load limiting as shown by line L₁. Otherwise the combination of the torsion bar 2 and the wires 8 provide the level of load limiting L₂ until point in time (T₂, T₃, T₄), at which the control signal is provided and the wires are disconnected from the force path between the spool 1 and the locking ring 3. The exact point at which the wires are disengaged is dependent upon a predetermined algorithm taking account of any combination of crash severity, crash duration, occupant size, occupant weight and occupant position.

## Claims

1. A seat belt retractor comprising:
a spool (1) mounted for rotation to allow retraction or pay-out of seat-belt webbing (11) wound thereon depending upon the rotation direction of the spool;
a locking ring (3) connected to the spool (1) for rotation therewith;
a locking plate (6) connected to the spool (1) for rotation therewith;
a lock bar (13) activated by a crash sensor to engage the locking ring (3) to prevent rotation when a crash condition is sensed;
first and second force limiting means for controlling pay-out of the seat belt webbing after the locking ring has been locked against rotation;
the first force limiting means comprising resilient means (2) having one end connected to the locking ring (3) and the other end connected to the spool (1) in the force path between the spool (1) and the lock bar (13);
the second force limiting means comprising a wire (8) having one end located in a recess (9) in the spool (1) and the other end connected to the locking plate (6); **characterised by**,
means for selectively engaging the locking plate (6) with the locking ring (3); and,
means for selectively connecting the locking plate (6) to the lock bar (13) such that when the locking plate (6) is secured against rotation the second force limiting means is activated.

2. A seat belt retractor according to claim 1, further comprising:
means for selectively moving the locking plate (6) to disconnect the wire (8) from the locking plate (6) to selectively disengage the second force limiting means wherein the other end of the wire is releasably connected to the locking plate (6).

3. A seat belt retractor according to claim 1, wherein the other end of the wire is fixed to the locking plate (6) and the retractor comprises means for selectively connecting the locking plate (6) to the lock bar (13) to lock the locking plate (6) against rotation to activate the second force limiting means.

4. A seat belt retractor according to any one of the preceding claims comprising means for selectively releasing the wire (8) from the force path at a predetermined time during a crash situation.

5. A seat belt retractor according to claim 4, wherein the selective releasing means operates.

6. A seat belt retractor according to claim 5, wherein the control signal is supplied in response to a means for sensing a value of at least one of the weight, size and position of the occupant, and the severity of the crash, and is activated if the sensed value is below a predetermined value.

7. A seat belt retractor according to claim 6, wherein the control signal is supplied in dependence upon whether an airbag is displayed.

8. A seat belt retractor according to any one of claims 2 to 7, wherein the locking plate (6) is selectively disengaged from the locking ring (3) by a means for moving the locking plate (6) in a direction parallel to the axis of the spool (1).

9. A seat belt retractor according to claim 8, wherein the means for moving the locking plate (6) comprises a pyrotechnic device (10) or a solenoid.

10. A seat belt retractor according to any one of claims 2 to 9, wherein the locking plate (6) and the locking ring (3) have complimentary teeth formations for selectively engaging the locking plate (6) and the locking ring (3).

11. A seat belt retractor according to any one of claims 3 to 7 comprising a second lockbar arranged to selectively engage and disengage the locking plate (6) such that when the locking plate (6) is disengaged with the lockbar, the wire is released from the force path.

12. A seat belt retractor according to any one of the preceding claims, wherein rotation of the spool (1) relative to the locking means causes deformation of the wire (8) when connected in the force path between the spool (1) and the locking means.

13. A seat belt retractor according to any one of the preceding claims, wherein the second force limiting means is primed with the wire (8) held in the force path between the spool (1) and the locking means prior to a crash condition.

14. A seat belt retractor according to any one of the preceding claims, wherein the second force limiting means comprises two wires (8) located in respective recesses (9) in the spool (1).

## Patentansprüche

1. Sicherheitsgurt-Aufrollvorrichtung, die Folgendes umfasst:
eine Spule (1), angebracht zum Drehen, um in Abhängigkeit von der Drehrichtung der Spule ein Aufrollen oder Ausgeben von auf derselben aufgewickeltem Sicherheitsgurtband (11) zu ermöglichen,
einen Sicherungsring (3), verbunden mit der Spule (1), um sich mit derselben zu drehen,
eine Sicherungsplatte (6), verbunden, mit der Spule (1), um sich mit derselben zu drehen,
eine Verriegelungsstange (13), aktiviert durch einen Aufprallsensor, um den Sicherungsring (3) in Eingriff zu nehmen, um ein Drehen zu verhindern, wenn ein Aufprallzustand abgefühlt wird,
erste und zweite Kraftbegrenzungsmittel, um das Ausgeben des Sicherheitsgurtbandes, nachdem der Sicherungsring gegen ein Drehen verriegelt worden ist, zu steuern,
wobei die ersten Kraftbegrenzungsmittel elastische Mittel (2), die das eine Ende mit dem Sicherungsring (3) verbunden und das andere Ende mit der Spule (1) verbunden haben, im Kraftweg zwischen der Spule (1) und der Verriegelungsstange (13) umfassen,
wobei die zweiten Kraftbegrenzungsmittel einen Draht (8), der das eine Ende in einer Aussparung (9) in der Spule (1) angeordnet und das andere Ende mit der Sicherungsplatte (6) verbunden hat, umfassen, **gekennzeichnet durch**
Mittel, um die Sicherungsplatte (6) selektiv in Eingriff mit dem Sicherungsring (3) zu bringen, und
Mittel, um die Sicherungsplatte (6) selektiv mit der Verriegelungsstange (13) zu verbinden derart, dass die zweiten Kraftbegrenzungsmittel aktiviert werden, wenn die Sicherungsplatte (6) gegen Drehen gesichert wird.

2. Sicherheitsgurt-Aufrollvorrichtung nach Anspruch 1, die ferner Folgendes umfasst:
Mittel, um die Sicherungsplatte (6) selektiv zu bewegen, um den Draht (8) von der Sicherungsplatte (6) zu trennen, um die zweiten Kraftbegrenzungsmittel selektiv auszurücken, wobei das andere Ende des Drahtes lösbar mit der Sicherungsplatte (6) verbunden ist.

3. Sicherheitsgurt-Aufrollvorrichtung nach Anspruch 1, wobei das andere Ende des Drahtes an der Sicherungsplatte (6) befestigt ist und die Aufrollvorrichtung Mittel umfasst, um die Sicherungsplatte (6) selektiv mit der Verriegelungsstange (13) zu verbinden, um die Sicherungsplatte (6) gegen ein Drehen zu verriegeln, um das zweite Kraftbegenzungsmittel zu aktivieren.

4. Sicherheitsgurt-Aufrollvorrichtung nach einem der vorhergehenden Ansprüche, die Mittel umfasst, um den Draht (8) zu einer vorbestimmten Zeit während einer Aufprallsituation selektiv vom Kraftweg zu lösen,

5. Sicherheitsgurt-Aufrollvorrichtung nach Anspruch 4, wobei das selektive Lösemittel arbeitet.

6. Sicherheitsgurt-Aufrollvorrichtung nach Anspruch 5, wobei das Steuersignal als Reaktion auf ein Mittel zum Abfühlen eines Werts wenigstens eines der Parameter Gewicht, Größe und Position des Insassen und Schwere des Aufpralls geliefert wird, und aktiviert wird, falls der abgefühlte Wert unterhalb eines vorbestimmtes Wertes liegt,

7. Sicherheitsgurt-Aufrollvorrichtung nach Anspruch 6, wobei das Steuersignal in Abhängigkeit davon, ob ein Airbag angezeigt wird, geliefert wird.

8. Sicherheitsgurt-Aufrollvorrichtung nach einem der Ansprüche 2 bis 7, wobei die Sicherungsplatte (6) durch ein Mittel zum Bewegen der Sicherungsplatte (6) in einer Richtung parallel zur Achse der Spule (1) selektiv vom Sicherungsring (3) ausgerückt wird.

9. Sicherheitsgart-Aufrollvorrichtung nach Anspruch 8, wobei das Mittel zum Bewegen der Sicherungsplatte (6) eine pyrotechnische Vorrichtung (10) oder ein Solenoid umfasst.

10. Sicherheitsgurt-Aufrollvorrichtung nach einem der Ansprüche 2 bis 9, wobei die Sicherungsplatte (6) und der Sicherungsring (3) komplementäre Zahnformationen haben, um die Sicherungsplatte (6) und den Sicherungsring (3) selektiv in Eingriff zu bringen.

11. Sicherheitsgurt-Aufrollvorrichtung nach einem der Ansprüche 3 bis 7, die eine zweite Verriegelungsstange umfasst, angeordnet, um die Sicherungsplatte (6) selektiv in Eingriff zu nehmen und auszurücken derart, dass der Draht aus dem Kraftweg gelöst wird, wenn die Sicherungsplatte (6) mit der Verriegelungsstange ausgerückt wird,

12. Sicherheitsgurt-Aufrollvorrichtung nach einem der vorhergehenden Ansprüche, wobei ein Drehen der Spule (1) im Verhältnis zu den Sicherungsmitteln ein Verformen des Drahtes (8) bewirkt, wenn er im Kraftweg zwischen der Spule (1) und den Sicherungsmitteln verbunden ist.

13. Sicherheitsgurt-Aufrollvorrichtung nach einem der vorhergehenden Ansprüche, wobei die zweiten Kraftbegrenzungsmittel mit dem im Kraftweg zwischen der Spule (1) und den Sicherungsmitteln gehaltenen Draht (8) vor einem Aufprallzustand scharf gemacht werden.

14. Sicherheitsgurt-Aufrollvorrichtung nach einem der vorhergehenden Ansprüche, wobei die zweiten Kraftbegrenzungsmittel zwei in entsprechenden Aussparungen (9) in der Spule (1) angeordnete Drähte (8) umfassen.

## Revendications

1. Enrouleur de ceinture de sécurité, comprenant:
une bobine (1) montée de sorte à pouvoir tourner pour permettre l'enroulement et le déroulement d'une sangle de la ceinture de sécurité (11) qui y est enroulée en fonction de la direction de rotation de la bobine;
une bague de verrouillage (3) connectée à la bobine (1) en vue d'une rotation avec celle-ci;
une plaque de verrouillage (6) connectée à la bobine (1) en vue d'une rotation avec celle-ci;
une barre de verrouillage (13) activée par un capteur de collision, pour s'engager dans la bague de verrouillage (3) pour empêcher une rotation lors de la détection d'un état de collision;
des premier et deuxième moyens de limitation de la force pour contrôler le déroulement de la sangle de la ceinture de sécurité après le verrouillage de la bague de verrouillage contre une rotation;
le premier moyen de limitation de la force comprenant un moyen élastique (2) comportant une extrémité connectée à la bague, de verrouillage (3), l'autre extrémité étant connectée à la bobine (1) dans la trajectoire de force entre la bobine (1) et la barre de verrouillage (13);
le deuxième moyen de limitation de la force comprenant un fil métallique (8) comportant une extrémité agencée dans un évidement (9) dans la bobine (1), l'autre extrémité étant connectée à la plaque de verrouillage (6), **caractérisé par**:
un moyen destiné à engager sélectivement la plaque de verrouillage (6) dans la bague de verrouillage (3); et
un moyen pour connecter sélectivement la plaque de verrouillage (6) à la barre de verrouillage (13), de sorte que le blocage de la plaque de verrouillage (6) contre une rotation entraîne l'actionnement du deuxième moyen de limitation de la force,

2. Enrouleur de ceinture de sécurité selon la revendication 1, comprenant en outre:
un moyen pour déplacer sélectivement la plaque de verrouillage (6), pour déconnecter le fil métallique (8) de la plaque de verrouillage (6) afin de dégager sélectivement le deuxième moyen de limitation de la force, l'autre extrémité du fil métallique étant connectée de manière amovible à la plaque de verrouillage (6).

3. Enrouleur de ceinture de sécurité selon la revendication 1, dans lequel l'autre extrémité du fil métallique est fixée sur la plaque de verrouillage (6), l'enrouleur comprenant un moyen pour connecter sélectivement la plaque de verrouillage (6) à la barre de (13), pour verrouiller la plaque de verrouillage (6) contre une rotation afin d'actionner le deuxième moyen de limitation de la force.

4. Enrouleur de ceinture de sécurité selon l'une quelconque des revendications précédentes, comprenant un moyen destiné à dégager sélectivement le fil métallique (8) de la trajectoire de force lors d'un moment prédéterminé au cours d'une collision.

5. Enrouleur de ceinture de sécurité selon la revendication 4, dans lequel le moyen de dégagement sélectif fonctionne.

6. Enrouleur de ceinture de sécurité selon la revendication 5, dans lequel le signal de commande est transmis en réponse à un moyen destiné à détecter une valeur d'au moins un paramètre parmi le poids, la taille et la position de l'occupant, et la gravité de la collision, et est actionné lorsque la valeur détectée est inférieure à une valeur prédéterminée.

7. Enrouleur de ceinture de sécurité selon la revendication 6, dans lequel le signal de commande est transmis en fonction du déploiement d'un coussin d'air.

8. Enrouleur de ceinture de sécurité selon l'une quelconque des revendications 2 à 7, dans lequel la plaque de verrouillage (6) est sélectivement dégagée de la bague de verrouillage (3) par un moyen destiné à déplacer la plaque de verrouillage (6) dans une direction parallèle à l'axe de la bobine (1).

9. Enrouleur de ceinture de sécurité selon la revendication 8, dans lequel le moyen destiné à déplacer la plaque de verrouillage (6) comprend un dispositif pyrotechnique (10) ou un solénoïde.

10. Enrouleur de ceinture de sécurité selon l'une quelconque des revendications 2 à 9, dans lequel la plaque de verrouillage (6) et la bague de verrouillage (3) comportent des structures de dents complémentaires pour assurer l'engagement sélectif de la plaque de verrouillage (6) et de la bague de verrouillage (3).

11. Enrouleur de ceinture de sécurité selon l'une quelconque des revendications 3 à 7, comprenant une deuxième barre de verrouillage arrangé pour s'engager sélectivement dans la plaque de verrouillage (6) et à se dégager de celle-ci, de sorte que lorsque la plaque de verrouillage (6) est dégagée de la barre de verrouillage, le fil métallique est dégagé de la trajectoire de force.

12. Enrouleur de ceinture de sécurité selon l'une quelconque des revendications précédentes, dans lequel la rotation de la bobine (1) par rapport au moyen de verrouillage entraîne la déformation du fil métallique (8) lorsqu'il est connecté dans la trajectoire de force entre la bobine (1) et le moyen de verrouillage.

13. Enrouleur de ceinture de sécurité selon l'une quelconque des revendications précédentes, dans lequel le deuxième moyen de limitation de la force est amorcé, le fil métallique (8) étant retenu dans la trajectoire de force entre la bobine (1) et le moyen de verrouillage avant une collision.

14. Enrouleur de ceinture de sécurité selon l'une quelconque des revendications précédentes, dans lequel le deuxième moyen de limitation de la force comprend deux fils (8) agencés dans des évidements respectifs (9) dans la bobine (1).
